# EUROPEAN PATENT APPLICATION

(11) **EP 4 593 126 A1**
(43) Date of publication of application: **30.07.2025**
(21) Application number: 25152834.5
(22) Date of filing: 20.01.2025
(51) Int. Cl.: H01M 4/86, H01M 4/88, H01M 4/90, H01M 8/12, H01M 4/84

(54) **STRONTIUM-RICH LSM AIR ELECTRODE FOR SOLID OXIDE ELECTROCHEMICAL CELL**

(30) Priority: 26.01.2024 US 202463625604 P
(71) Applicant: Bloom Energy Corporation, San Jose, CA 95134 (US)
(72) Inventor: LU, Zigui, San Jose, 95134 (US); SCHEETZ, Perry, San Jose, 95134 (US); GASDA, Michael, San Jose, 95134 (US); COX, Dalton, San Jose, 95134 (US)
(74) Representative: Wichmann, Hendrik

(57) **Abstract**

A solid oxide electrochemical cell includes a solid oxide electrolyte, a fuel electrode located on a first side of the solid oxide electrolyte, and an air located on a second side of the solid oxide electrolyte. The air electrode includes strontium-rich lanthanum strontium manganite.

## Description

### FIELD

The present disclosure is directed to electrochemical cells in general, and to electrochemical cell air electrode materials in particular.

### BACKGROUND

In a high temperature fuel cell system, such as a solid oxide fuel cell (SOFC) system, an oxidizing flow is directed to the cathode side of the fuel cell while a fuel flow is directed to the anode side of the fuel cell. The oxidizing flow is typically air, while the fuel flow can be a hydrocarbon fuel, such as methane, natural gas, pentane, ethanol, or methanol, as well as hydrocarbon fuels blended with pure hydrogen. The SOFC, operating at a temperature between 750°C and 950°C, enables the transport of negatively charged oxygen ions from the cathode flow stream to the anode flow stream, where the ion combines with either free hydrogen or hydrogen in a hydrocarbon molecule to form water vapor and/or with carbon monoxide to form carbon dioxide. The excess electrons from the negatively charged ion are routed back to the cathode side of the fuel cell through an electrical circuit completed between anode and cathode, resulting in an electrical current flow through the circuit.

Fuel cell stacks may be either internally or externally manifolded for fuel and air. In internally manifolded stacks, the fuel and air is distributed to each cell using risers contained within the stack. In other words, the gas flows through openings or holes in the supporting layer of each fuel cell, such as the electrolyte layer, and gas flow separator of each cell.

Fuel cell stacks are frequently built from a multiplicity of cells in the form of planar elements, tubes, or other geometries. Fuel and air have to be provided to electrochemically active surfaces, which can be large. One component of a fuel cell stack is the so called gas flow separator (referred to as a gas flow separator plate in a planar stack) that separates the individual cells in the stack. The gas flow separator plate separates fuel, such as hydrogen or a hydrocarbon fuel, flowing to the fuel electrode (i.e., anode) of one cell in the stack from oxidant, such as air, flowing to the air electrode (i.e., cathode) of an adjacent cell in the stack. Frequently, the gas flow separator plate is also used as an interconnect which electrically connects the fuel electrode of one cell to the air electrode of the adjacent cell. In this case, the gas flow separator plate which functions as an interconnect is made of or contains an electrically conductive material.

### SUMMARY

In one embodiment, a solid oxide electrochemical cell includes a solid oxide electrolyte, a fuel electrode located on a first side of the solid oxide electrolyte; and an air electrode located on a second side of the solid oxide electrolyte. The air electrode comprises lanthanum strontium manganate (LSM) represented by a first formula: (Lai-, Sr_{z})_{q}MnO_{3-d}, wherein z ranges from 0.3 to 0.8, q ranges from 0.9 to 1, and d is the equilibrium oxygen deficiency which ranges from 0 to 0.2.

### BRIEF DESCRIPTION OF THE DRAWINGS

The accompanying drawings, which are incorporated herein and constitute part of this specification, illustrate example embodiments of the invention, and together with the general description given above and the detailed description given below, serve to explain the features of the invention.
FIG. 1A is a perspective view of a fuel cell column, according to various embodiments of the present disclosure.
FIG. 1B is a perspective view of one counter-flow solid oxide fuel cell stack included in the column of FIG. 1A, according to various embodiments of the present disclosure.
FIG. 1C is a side cross-sectional view of a portion of the stack of FIG. 1B, according to various embodiments of the present disclosure.
FIG. 2A is a top view of the air side of an interconnect of the stack of FIG. 1B.
FIG. 2B is a top view of the fuel side of the interconnect of the stack of FIG. 1B.
FIG. 3A is a perspective view of a fuel cell stack, according to various embodiments of the present disclosure.
FIG. 3B is an exploded perspective view of a portion of the stack of FIG. 3A, according to various embodiments of the present disclosure.
FIG. 3C is a top view of the fuel side of a cross-flow interconnect included in the stack of FIG. 3A.
FIG. 3D is a schematic view of a fuel cell included in the stack of FIG. 3A, according to various embodiments of the present disclosure.
FIG. 4A is a plan view showing an air side of the cross-flow interconnect of FIG. 3C.
FIG. 4B is a plan view showing a fuel side of the cross-flow interconnect of FIG. 3C.
FIG. 5 is a schematic view of an electrochemical cell, according to one embodiment of the present disclosure.
FIG. 6 is a schematic view of an electrochemical cell, according to another embodiment of the present disclosure.

### DETAILED DESCRIPTION

The various embodiments will be described in detail with reference to the accompanying drawings. The drawings are not necessarily to scale and are intended to illustrate various features of the invention. Wherever possible, the same reference numbers will be used throughout the drawings to refer to the same or like parts. References made to particular examples and implementations are for illustrative purposes and are not intended to limit the scope of the invention or the claims.

Ranges can be expressed herein as from "about" one particular value, and/or to "about" another particular value. When such a range is expressed, examples include from the one particular value and/or to the other particular value. Similarly, when values are expressed as approximations, by use of the antecedent "about" or "substantially" it will be understood that the particular value forms another aspect. In some embodiments, a value of "about X" may include values of +/- 1% X. It will be further understood that the endpoints of each of the ranges are significant both in relation to the other endpoint, and independently of the other endpoint.

Electrochemical cell systems include fuel cell and electrolyzer cell systems. In a high temperature fuel cell system, such as a solid oxide fuel cell (SOFC) system, an oxidizing flow is directed to the cathode side of the fuel cell while a fuel flow is directed to the anode side of the fuel cell. The oxidizing flow is typically air, while the fuel flow can be hydrogen (H₂) or a hydrocarbon fuel, such as methane, natural gas, ethanol, or methanol, a hydrogen containing fuel such as ammonia, or a hydrocarbon fuel blended with hydrogen. The fuel cell, operating at a temperature between 750°C and 950°C, enables the transport of negatively charged oxygen ions from the cathode flow stream to the anode flow stream, where the oxygen ions combine with either free hydrogen or hydrogen in a hydrocarbon molecule to form water vapor and/or with carbon monoxide to form carbon dioxide. The excess electrons from the negatively charged ions are routed back to the cathode side of the fuel cell through an electrical circuit completed between anode and cathode, resulting in an electrical current flow through the circuit. In an electrolyzer system, such as a solid oxide electrolyzer system, water (e.g., steam) is separated into hydrogen and oxygen by applying a voltage across the electrolyzer cells.

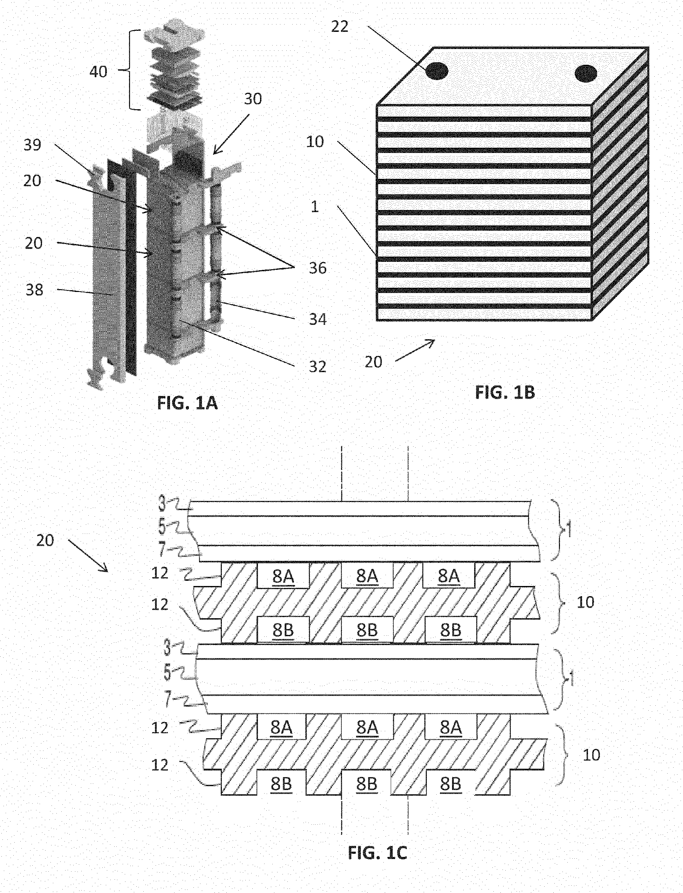

FIG. 1A is a perspective view of an externally manifolded electrochemical cell column 30, FIG. 1B is a perspective view of one counterflow solid oxide electrochemical cell stack 20 included in the column 30 of FIG. 1A, and FIG. 1C is a side cross-sectional view of a portion of the stack 20 of FIG. 1B.

In various embodiments, the column 30 may be described as being operated as a solid oxide fuel cell (SOFC) column 30. However, it should be noted that the electrochemical column 30 may also be operated as an electrolyzer column (e.g., a solid oxide electrolyzer cell (SOEC) column). In the SOEC column, the anode is the air electrode and the cathode is the fuel (e.g., steam) electrode, while in a SOFC column the anode is the fuel electrode and the cathode is the air electrode. Thus, the electrode to which the fuel (e.g., hydrogen or hydrocarbon fuel in a SOFC, and steam in a SOEC) is supplied may be referred to as the fuel electrode and the opposing electrode may be referred to as the air electrode in both SOFC and SOEC cells.

Referring to FIGS. 1A and 1B, the column 30 may include one or more stacks 20, a fuel inlet conduit 32, an anode exhaust conduit 34, and anode feed/return assemblies 36 (e.g., anode splitter plates (ASPs) 36). The column 30 may also include side baffles 38 and a compression assembly 40. The side baffles 38 may be connected to the compression assembly 40 and an underlying stack component (not shown) by ceramic connectors 39. The fuel inlet conduit 32 is fluidly connected to the ASPs 36 and is configured to provide the fuel feed to each ASP 36, and anode exhaust conduit 34 is fluidly connected to the ASPs 36 and is configured to receive anode fuel exhaust from each ASP 36.

The ASPs 36 are disposed between the stacks 20 and are configured to provide a hydrocarbon fuel containing fuel feed to the stacks 20 and to receive anode fuel exhaust from the stacks 20. For example, the ASPs 36 may be fluidly connected to internal fuel riser channels 22 formed in the stacks 20, as discussed below.

Referring to FIG. 1C, the stack 20 includes multiple fuel cells 1 that are separated by interconnects 10, which may also be referred to as gas flow separator plates or bipolar plates. Each fuel cell 1 includes a cathode electrode 3, a solid oxide electrolyte 5, and an anode electrode 7.

Each interconnect 10 electrically connects adjacent fuel cells 1 in the stack 20. In particular, an interconnect 10 may electrically connect the anode electrode 7 of one fuel cell 1 to the cathode electrode 3 of an adjacent fuel cell 1. FIG. 1C shows that the lower fuel cell 1 is located between two interconnects 10.

Each interconnect 10 includes ribs 12 that at least partially define fuel channels 8A and air channels 8B. The interconnect 10 may operate as a gas-fuel separator that separates a fuel, such as a hydrocarbon fuel, flowing to the fuel electrode (i.e. anode 7) of one cell in the stack from oxidant, such as air, flowing to the air electrode (i.e. cathode 3) of an adjacent cell in the stack. At either end of the stack 20, there may be an air end plate or fuel end plate (not shown) for providing air or fuel, respectively, to the end electrode.

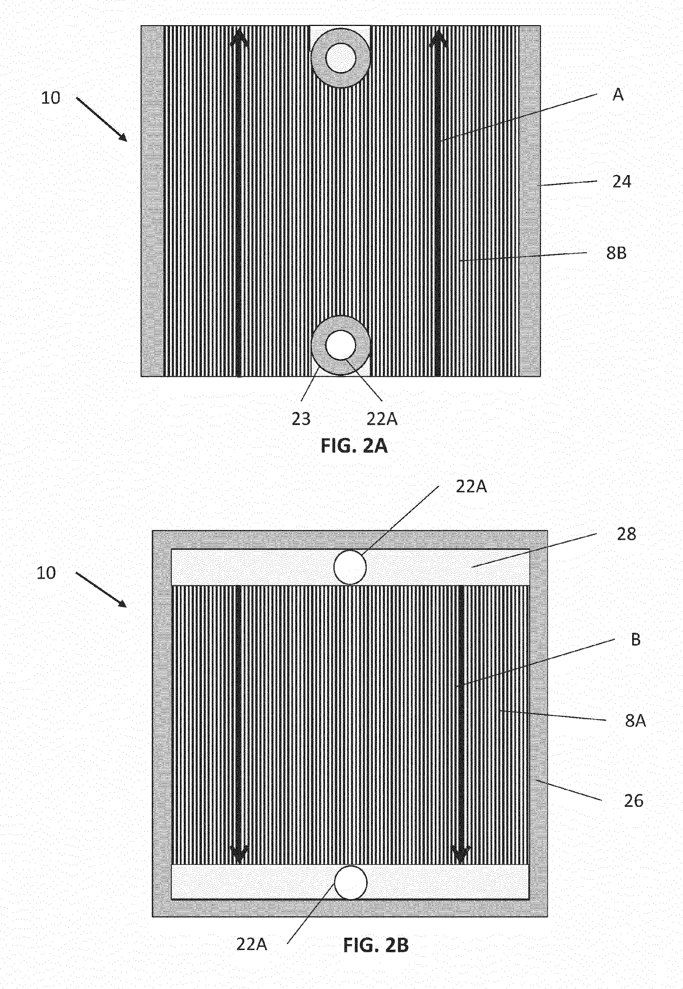

FIG. 2A is a top view of the air side of an exemplary interconnect 10, and FIG. 2B is a top view of a fuel side of the interconnect 10. Referring to FIGS. 1C and 2A, the air side includes the air channels 8B. Air flows through the air channels 8B to a cathode electrode 3 of an adjacent fuel cell 1. In particular, the air may flow across the interconnect 10 in a first direction A as indicated by the arrows.

Ring seals 23 may surround fuel holes 22A of the interconnect 10, to prevent fuel from contacting the cathode electrode. Peripheral strip-shaped seals 24 are located on peripheral portions of the air side of the interconnect 10. The seals 23, 24 may be formed of a glass material. The peripheral portions may be in the form of an elevated plateau which does not include ribs or channels. The surface of the peripheral regions may be coplanar with tops of the ribs 12.

Referring to FIGS. 1C and 2B, the fuel side of the interconnect 10 may include the fuel channels 8A and fuel manifolds 28 (e.g., fuel plenums). Fuel flows from one of the fuel holes 22A, into the adjacent manifold 28, through the fuel channels 8A, and to an anode 7 of an adjacent fuel cell 1. Excess fuel and anode exhaust may flow into the other fuel manifold 28 and then into the adjacent fuel hole 22A. In particular, the fuel may flow across the interconnect 10 in a second direction B, as indicated by the arrows. The second direction B may be perpendicular to the first direction A (see FIG. 2A).

A frame-shaped seal 26 is disposed on a peripheral region of the fuel side of the interconnect 10. The peripheral region may be an elevated plateau which does not include ribs or channels. The surface of the peripheral region may be coplanar with tops of the ribs 12. The surface of the manifold 28 may be coplanar with the bottom of the fuel channels or optionally may be below the surface of the bottom of the fuel channels.

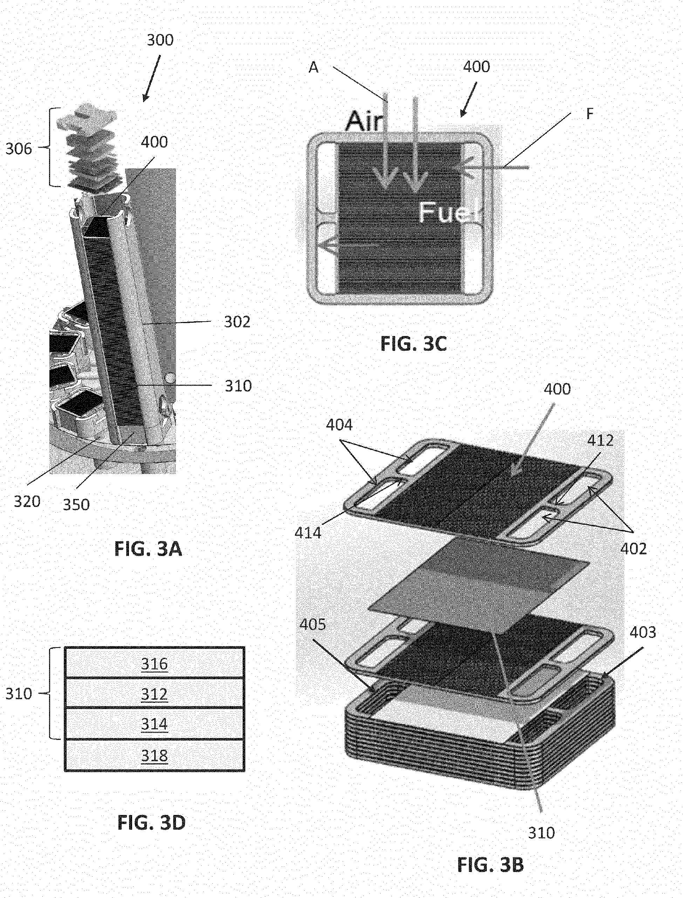

FIG. 3A is a perspective view of a fuel cell stack 300, according to various embodiments of the present disclosure, FIG. 3B is an exploded perspective view of a portion of the stack 300 of FIG. 3A, FIG. 3C is a top view of the fuel side of an interconnect 400 included in the stack 300, and FIG. 3D is a schematic view of a fuel cell included in the stack 300.

Referring to FIGS. 3A-3D, the fuel cell stack 300, which may also be referred to as a fuel cell column because it lacks ASPs, includes multiple fuel cells 310 that are separated by interconnects 400, which may also be referred to as gas flow separator plates or bipolar plates. One or more stacks 300 may be thermally integrated with other components of a fuel cell power generating system (e.g., one or more anode tail gas oxidizers, fuel reformers, fluid conduits and manifolds, etc.) in a common enclosure or "hotbox."

The interconnects 400 are made from an electrically conductive metal material. For example, the interconnects 400 may comprise a chromium alloy, such as a Cr-Fe alloy. The interconnects 400 may typically be fabricated using a powder metallurgy technique that includes pressing and sintering a Cr-Fe powder, which may be a mixture of Cr and Fe powders or an Cr-Fe alloy powder, to form a Cr-Fe interconnect in a desired size and shape (e.g., a "net shape" or "near net shape" process). A typical chromium-alloy interconnect 400 comprises more than about 90% chromium by weight, such as about 94-96% (e.g., 95%) chromium by weight. An interconnect 400 may also contain less than about 10% iron by weight, such as about 4-6% (e.g., 5%) iron by weight, may contain less than about 2% by weight, such as about zero to 1% by weight, of other materials, such as yttrium or yttria, as well as residual or unavoidable impurities.

Each fuel cell 310 may include a solid oxide electrolyte 312, an anode 314, and a cathode 316. In some embodiments, the anode 314 and the cathode 316 may be printed on the electrolyte 312. In other embodiments, a conductive layer 318, such as a nickel mesh, may be disposed between the anode 314 and an adjacent interconnect 400. The fuel cell 310 does not include through-holes, such as the fuel holes extending through the electrolyte layers of fuel cells illustrated in FIG. 1B. As such, the fuel cell 310 may avoid cracks that could be generated due to the presence of such through-holes.

An upper most interconnect 400 and a lowermost interconnect 400 of the stack 300 may be different ones of an air end plate or fuel end plate including features for providing air or fuel, respectively, to an adjacent end fuel cell 310. As used herein, an "interconnect" may refer to either an interconnect located between two fuel cells 310 or an end plate located at an end of the stack and directly adjacent to only one fuel cell 310. Since the stack 300 does not include ASPs and the end plates associated therewith, the stack 300 may include only two end plates. As a result, stack dimensional variations associated with the use of intra-column ASPs may be avoided.

The stack 300 may include side baffles 302, a fuel plenum 350, and a compression assembly 306. The side baffles 302 may be formed of a ceramic material and may be disposed on opposing sides of the fuel cell stack 300 containing stacked fuel cells 310 and interconnects 400. The side baffles 302 may connect the fuel plenum 350 and the compression assembly 306, such that the compression assembly 306 may apply pressure to the stack 300. The side baffles 302 may be curved baffle plates, such that each baffle plate covers at least portions of three sides of the fuel cell stack 300. For example, one baffle plate may fully cover the fuel inlet riser side of the stack 300 and partially cover the adjacent front and back sides of the stack, while the other baffle plate fully covers the fuel outlet riser side of the stack and partially covers the adjacent portions of the front and back sides of the stack. The remaining uncovered portions for the front and back sides of the stack allow air to flow through the stack 300. The curved baffle plates provide an improved air flow control through the stack. The fuel plenum 350 may be disposed below the stack 300 and may be configured to provide a hydrogen-containing fuel feed to the stack 300, and may receive an anode fuel exhaust from the stack 300. The fuel plenum 350 may be connected to fuel inlet and outlet conduits 320 which are located below the fuel plenum 350.

Each interconnect 400 electrically connects adjacent fuel cells 310 in the stack 300. In particular, an interconnect 400 may electrically connect the anode electrode of one fuel cell 310 to the cathode electrode of an adjacent fuel cell 310. As shown in FIG. 3C, each interconnect 400 may be configured to channel air in a first direction A, such that the air may be provided to the cathode of an adjacent fuel cell 310. Each interconnect 400 may also be configured to channel fuel in a second direction F, such that the fuel may be provided to the anode of an adjacent fuel cell 310. Directions A and F may be perpendicular, or substantially perpendicular. As such, the interconnects 400 may be referred to as cross-flow interconnects.

The interconnect 400 may include fuel holes that extend through the interconnect 400 and that are configured for fuel distribution. For example, the fuel holes may include one or more fuel inlets 402 and one or more fuel (e.g., anode exhaust) outlets 404, which may also be referred to as anode exhaust outlets 404. The fuel inlets and outlets 402, 404 may be disposed outside of the perimeter of the fuel cells 310. As such, the fuel cells 310 may be formed without corresponding through-holes for fuel flow. The combined length of the fuel inlets 402 and/or the combined length of the fuel outlets 404 may be at least 75% of a corresponding length of the interconnect 400 e.g., a length taken in direction A.

In one embodiment, each interconnect 400 contains two fuel inlets 402 separated by a neck portion 412 of the interconnect 400, as shown in FIG. 3B. However, more than two fuel inlets 402 may be included, such as three to five inlets separated by two to four neck portions 412. In one embodiment, each interconnect 400 contains two fuel outlets 404 separated by a neck portion 414 of the interconnect 400, as shown in FIG. 3B. However, more than two fuel outlets 404 may be included, such as three to five outlets separated by two to four neck portions 414.

The fuel inlets 402 of adjacent interconnects 400 may be aligned in the stack 300 to form one or more fuel inlet risers 403. The fuel outlets 404 of adjacent interconnects 400 may be aligned in the stack 300 to form one or more fuel outlet risers 405. The fuel inlet riser 403 may be configured to distribute fuel received from the fuel plenum 350 to the fuel cells 310. The fuel outlet riser 405 may be configured to provide anode exhaust received from the fuel cells 310 to the fuel plenum 350.

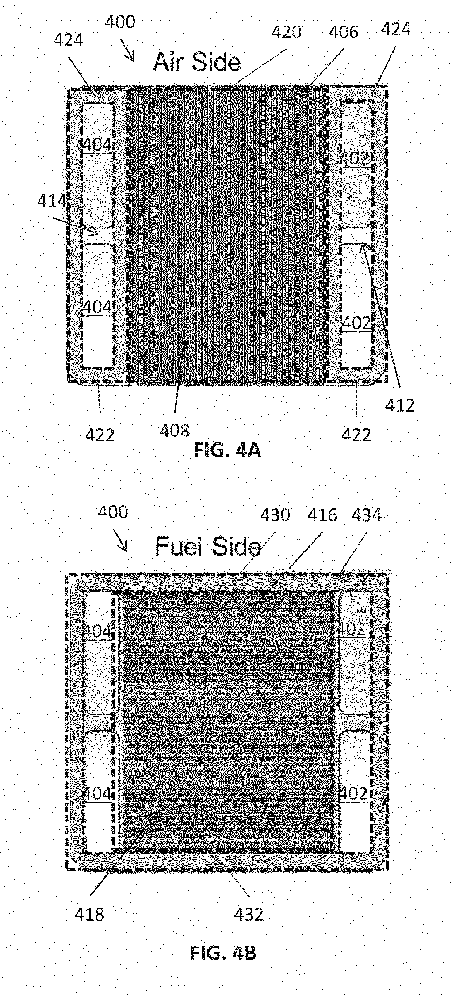

Unlike the flat side baffles 38 of FIG. 1A, the side baffles 302 may be curved around edges of the interconnects 400. In particular, the side baffles 302 may be disposed around the fuel inlets 402 and outlets 404 of the interconnects 400. Accordingly, the side baffles may more efficiently control air flow through air channels of the interconnects 400, which are exposed between the side baffles 302 and are described in detail with regard to FIGS. 4A and 4B.

In various embodiments, the stack 300 may include from about 200 to 400 fuel cells, such as about 250 to 350 fuel cells, more particularly from about 275 to 325 fuel cells, which may be provided with fuel using only the fuel risers 403, 405. The cross-flow configuration allows for a large number of fuel cells to be provided with fuel, without the need for ASPs or external stack fuel manifolds, such as external conduits 32, 34 shown in FIG. 1A.

Each interconnect 400 may be made of or may contain electrically conductive material, such as a metal alloy (e.g., chromium-iron alloy) which has a similar coefficient of thermal expansion to that of the solid oxide electrolyte in the cells (e.g., a difference of 0-10%). For example, the interconnects 400 may comprise a metal (e.g., a chromium-iron alloy, such as 4-6 weight percent iron, optionally 1 or less weight percent yttrium and balance chromium alloy), and may electrically connect the anode or fuel-side of one fuel cell 310 to the cathode or air-side of an adjacent fuel cell 310. An electrically conductive contact layer, such as a nickel contact layer (e.g., a nickel mesh), may be provided between anode and each interconnect 400. Another optional electrically conductive contact layer may be provided between the cathode electrodes and each interconnect 400.

A surface of an interconnect 400 that in operation is exposed to an oxidizing environment (e.g., air), such as the cathode-facing side of the interconnect 400, may be coated with a protective coating layer in order to decrease the growth rate of a chromium oxide surface layer on the interconnect and to suppress evaporation of chromium vapor species which can poison the fuel cell cathode. Typically, the coating layer, which can comprise a perovskite such as LSM, may be formed using a spray coating or dip coating process. Alternatively, other metal oxide coatings, such as a spinel, such as manganese cobalt oxide spinel (MCO), can be used instead of or in addition to LSM. Any spinel having the composition Mn₂₋ₓ Co₁₊ₓ O₄ (0 ≤ x ≤ 1) or written as y(Mn₃ O₄) + (1-y)(Co₃ O₄), where (1/3 ≤ y ≤ 2/3) or written as (Mn, Co)₃ O₄ may be used. In other embodiments, a mixed layer of LSM and MCO, or a stack of LSM and MCO layers may be used as the coating layer.

FIGS. 4A and 4B are plan views showing, respectively, an air side and a fuel side of the cross-flow interconnect 400, according to various embodiments of the present disclosure. Referring to FIG. 4A, the air side of the interconnect 400 may include ribs 406 configured to at least partially define air channels 408 configured to provide air to the cathode of a fuel cell 310 disposed thereon. The air side of the interconnect 400 may be divided into an air flow field 420 including the air channels 408, and riser seal surfaces 422 disposed on two opposing sides of the air flow field 420. One of the riser seal surfaces 422 may surround the fuel inlets 402 and the other riser seal surface 422 may surround the fuel outlets 404. The air channels 408 and ribs 406 may extend completely across the air side of the interconnect 400, such that the air channels 408 and ribs 406 terminate at opposing peripheral edges of the interconnect 400. In other words, when assembled into a stack 300, opposing ends of the air channels 408 and ribs 406 are disposed on opposing (e.g., front and back) outer surfaces of the stack, to allow the blown air to flow through the stack. Therefore, the stack may be externally manifolded for air.

Riser seals 424 may be disposed on the riser seal surface 422. For example, one riser seal 424 may surround the fuel inlets 402, and one riser seal 424 may surround the fuel outlets 404. The riser seals 424 may prevent fuel and/or anode exhaust from entering the air flow field 420 and contacting the cathode of the fuel cell 310. The riser seals 424 may also operate to prevent fuel from leaking out of the fuel cell stack 100 (see FIG. 3A).

Referring to FIG. 4B, the fuel side of the interconnect 400 may include ribs 416 that at least partially define fuel channels 418 configured to provide fuel to the anode of a fuel cell 310 disposed thereon. The fuel side of the interconnect 400 may be divided into a fuel flow field 430 including the fuel channels 418, and a perimeter seal surface 432 surrounding the fuel flow field 430 and the fuel inlets and outlets 402, 404. The ribs 416 and fuel channels 418 may extend in a direction that is perpendicular or substantially perpendicular to the direction in which the air-side channels 408 and ribs 406 extend.

A frame-shaped perimeter seal 434 may be disposed on the perimeter seal surface 432. The perimeter seal 434 may be configured to prevent air entering the fuel flow field 430 and contacting the anode on an adjacent fuel cell 310. The perimeter seal 434 may also operate to prevent fuel from exiting the fuel risers 403, 405 and leaking out of the fuel cell stack 300 (see FIGS. 3A and 3B).

The seals 424, 434 may comprise a glass or ceramic seal material. The seal material may have a low electrical conductivity. In some embodiments, the seals 424, 434 may be formed by printing one or more layers of seal material on the interconnect 400, followed by sintering.

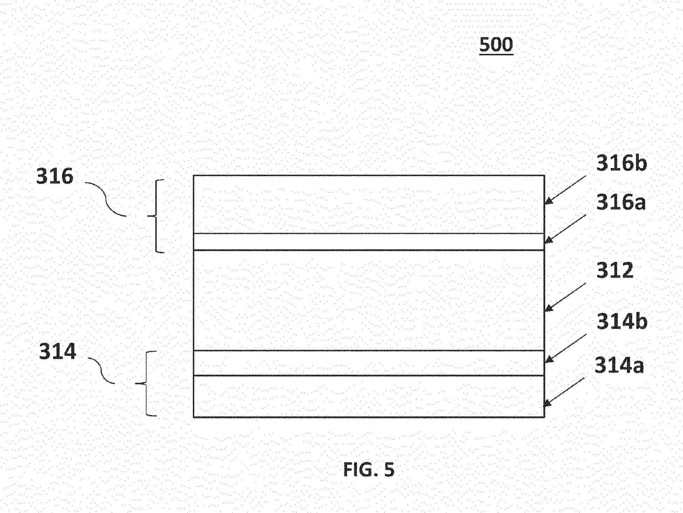

FIG. 5 is a schematic view of an electrochemical cell 500, according to an embodiment of the present disclosure. The electrochemical cell 500 may comprise a solid oxide fuel cell (SOFC) or a solid oxide electrolyzer cell (SOEC). In a solid oxide electrolyzer cell, a voltage is applied between the fuel and air electrodes, and a water (e.g., steam) containing stream is provided to the fuel electrode. The water is electrolyzed into hydrogen and oxygen at the fuel electrode. The oxygen ions are transported across the electrolyte to the air electrode. An oxygen containing exhaust stream is provided from the air electrode. A hydrogen containing stream is provided from the fuel electrode.

The electrochemical cell 500 contains a solid oxide electrolyte 312, a fuel electrode 314 and an air electrode 316. In the embodiment described below, the electrochemical cell 500 is a SOFC, in which the fuel electrode 314 is referred to as the anode 314, and the air electrode 316 is referred to the as the cathode 316. However, in an alternative embodiment in which the electrochemical cell 500 is a SOEC, the fuel electrode 314 functions as the cathode, and the air electrode 316 functions as the anode.

The anode 314 includes an anode current collecting layer 314a and an anode functional layer 314b. The cathode 316 includes a cathode functional layer (CFL) 316a and a cathode current collecting layer (CCL) 316b.

The electrolyte 312 may comprise an ionically conductive ceramic, such as doped zirconia, doped ceria, and/or any other suitable ionically conductive ceramic oxide material. For example, the electrolyte 312 may include yttria-stabilized zirconia (YSZ), yttria-ceria-stabilized zirconia (YCSZ), scandia-stabilized zirconia (SSZ), ytterbia-ceria-scandia-stabilized zirconia (YbCSSZ), or blends thereof. In the case of YbCSSZ, scandia may be present in an amount equal to 9 to 11 mol %, such as 10 mol %, ceria may present in amount greater than 0 and equal to or less than 3 mol %, for example 0.5 mol % to 2.5 mol %, such as 1 mol %, and ytterbia may be present in an amount greater than 0 and equal to or less than 2.5 mol %, for example 0.5 mol % to 2 mol %, such as 1 mol %, as disclosed in U.S. Pat. No. 8,580,456, which is incorporated herein, by reference. In the case of YCSZ, yttria may be present in an amount equal to 8 to 10 mol %, and optionally ceria may be present in an amount equal to 0 to 3 mol %. In other embodiments, the electrolyte may include samaria, gadolinia, or yttria-doped ceria.

The anode 314 is located over a first side of the electrolyte 312. The anode functional layer 314b is located between the anode current collecting layer 314a and the first side of the electrolyte 312. The anode 314 may include at least one cermet that includes a metallic phase and a ceramic phase. The metallic phase may include a metal catalyst and the ceramic phase may include one or more ceramic materials. The ceramic phase of the anode 314 may comprise any suitable ionically conductive ceramic material, such as a doped ceria and/or a doped zirconia. For example, the ceramic phase may include, but is not limited to gadolinia-doped ceria (GDC), samaria-doped ceria (SDC), praseodymia doped ceria (PDC), ytterbia-doped ceria (YDC), scandia-stabilized zirconia (SSZ), ytterbia-ceria-scandia-stabilized zirconia (YCSSZ), yttria stabilized zirconia (YSZ), or the like. For example, the ceramic material may comprise a doped ceria, such as samaria, gadolinia and/or praseodymia doped ceria, for example 10 to 20 mol % of Sm₂O₃, Gd₂O₃, and/or Pr₂O₃ doped CeO₂. The metallic phase may include a metal catalyst, such as nickel (Ni), which operates as an electron conductor. The metal catalyst may be in a metallic state or may be in an oxide state. For example, the metal catalyst forms a metal oxide when it is in an oxidized state. Thus, the anode may be annealed in a reducing atmosphere prior to and/or during operation of the fuel cell, to reduce the metal catalyst to a metallic state. The anode functional layer 314b contains a lower ratio of the nickel containing phase to the ceramic phase than the anode current collecting layer 314a.

The cathode 316 is located over the second side of the electrolyte 312. The CFL 316a is located between the CCL 316b and the second side of the electrolyte 312. The electrode 316 comprises the air electrode in both the SOEC and the SOFC.

In one embodiment, the CFL 316a comprises a composite of a majority-electronic conductor and a majority-ionic conductor. The CFL 316a may include a mixture of an electrically conductive perovskite metal oxide material and an ionically conductive stabilized zirconia or doped ceria material. The electrically conductive material may comprise lanthanum strontium manganite (LSM), lanthanum strontium cobalt ferrite (LSCF), lanthanum strontium cobaltite (LSC), lanthanum strontium cobalt manganite (LSCM), lanthanum strontium ferrite (LSF), lanthanum strontium cobalt nickel oxide (LSCN) (e.g., La_{0.85}Sr_{0.15}Co_{0.9}Ni_{0.1}O₃ ), combinations thereof, or the like.

In one embodiment, the electrically conductive material may comprise LSM. The LSM may be a low strontium content LSM represented by a formula: (La_{1-z} Sr_{z})_{q}MnO_{3-d}, wherein z ranges from 0.1 to 0.2, q ranges from 0.9 to 1, such as 0.95 to 1, and d is the equilibrium oxygen deficiency which ranges from 0 to 0.2, such as 0 to 0.1. For example, the low strontium content LSM may comprise La_{0.8}Sr_{0.2}MnO_{3-d} or A-site deficient, low strontium content LSM, in which q ranges from 0.9 to 0.99, such as 0.95 to 0.99, for example (La_{0.8}Sr_{0.2})_{0.97}MnO_{3-d}, wherein d ranges from 0 to 0.1.

In one embodiment, the ionically conductive material may comprise a stabilized zirconia, such as yttria-stabilized zirconia (YSZ), yttria-ceria-stabilized zirconia (YCSZ), scandia-stabilized zirconia (SSZ), ytterbia-ceria-scandia-stabilized zirconia (YbCSSZ), or blends thereof. In the case of YbCSSZ, scandia may be present in an amount equal to 9 to 11 mol %, such as 10 mol %, ceria may present in amount greater than 0 and equal to or less than 3 mol %, for example 0.5 mol % to 2.5 mol %, such as 1 mol %, and ytterbia may be present in an amount greater than 0 and equal to or less than 2.5 mol %, for example 0.5 mol % to 2 mol %, such as 1 mol %. In another embodiment, the ionically conductive material may comprise a doped ceria, such samaria, gadolinia, or yttria-doped ceria.

The CFL 316a may include from about 10 wt.% to about 90 wt.%, such as about 40 wt.% to about 60 wt.%, of the electrically conductive material described above, and from about 10 wt.% to about 90 wt.%, such as about 40 wt.% to about 60 wt.%, of the ionically conductive stabilized zirconia or doped ceria material. For example, the CFL 316a may be a composite of the low strontium content LSM and the YbCSSZ.

The CCL 316b comprises the majority-electronic conductor with or without the majority-ionic conductor. If the majority-ionic conductor, such as a stabilized zirconia or a doped ceria, is included in the CCL 316b, the ratio of then majority-electronic conductor to the majority-ionic conductor in the CCL 316b is higher than in the CFL 316a. Alternatively, CCL 316 consists essentially of the majority-electronic conductor with no majority-ionic conductor or unavoidable amount of the majority-ionic conductor that diffuses into the CCL 316b from the CFL 316a during cell fabrication or cell operation.

In one embodiment, the CCL 316b includes or consists essentially of a high strontium content LSM (e.g., strontium-rich LSM) which contains a higher strontium content than the low strontium content LSM of the CFL 316a. The high strontium content LSM is represented by a formula: (La_{1-z}Sr_{z})_{q}MnO_{3-d}, wherein z ranges from 0.3 to 0.8, q ranges from 0.9 to 1, such as 0.95 to 1, and d is the equilibrium oxygen deficiency which ranges from 0 to 0.2, such as 0 to 0.1. In one embodiment, z ranges from 0.3 to 0.7, such as from 0.35 to 0.6, including from 0.4 to 0.6 or from 0.4 to 0.5. For example, the high strontium content LSM may comprise A-site deficient, high strontium content LSM in which q ranges from 0.9 to 0.99, such as 0.94 to 0.98, for example (La_{0.7}Sr_{0.3})_{0.95}MnO_{3-d}, (La_{0.65}Sr_{0.35})_{0.95}MnO_{3-d}, (La_{0.6}Sr_{0.4})_{0.95}MnO_{3-d} or (La_{0.5}Sr_{0.5})_{0.95}MnO_{3-d} wherein d ranges from 0 to 0.1.

The CCL 316b may include from about 90 wt.% to about 100 wt.%, such as about 95 wt.% to about 99 wt.%, of the electrically conductive high strontium content LSM material described above, and from 0 wt.% to about 10 wt.%, such as about 0.01 wt.% to about 1 wt.%, of the ionically conductive stabilized zirconia or doped ceria material.

Although not conclusive, it is believed that a lower strontium content (e.g., in which z ranges from 0.1 to 0.2, inclusive, in the LSM formula above) decreases the reactivity of the LSM with stabilized zirconia, and thus decreases formation of strontium zirconate (SrZrO₃), which is insulating and detrimental to the performance of the electrochemical cell. Therefore, the low strontium content LSM may be used in the CFL 316a which may also contain the stabilized zirconia. In contrast, it is believed that a higher strontium content (e.g., in which z ranges from 0.3 to 0.8, inclusive) increases the electrical conductivity of the LSM. For example, it is believed that the electrical conductivity of LSM increases above z =0.2, such as from z = 0.3 to z = 0.5, peaks around z = 0.5 and then decreases from z=0.5 to z = 0.8. However, when z is greater than 0.5 and less than 0.8, the electrical conductivity of LSM is still relatively high compared to the low strontium content LSM where z ranges from 0.1 to 0.2 Therefore, the high strontium content LSM may be used in the CCL 316b to increase the electrical conductivity of the CCL 316b without significant concern about formation of strontium zirconate because the CCL 316b includes little or no stabilized zirconia. Furthermore, although not conclusive, the additional strontium in the high strontium content LSM may act as a chromium getter, and may capture chromium vapor diffusing out of an adjacent interconnect 10 in the column 30 before the chromium reaches the CFL 316a and/or the electrolyte 312.

The present inventors tested a SOFC stack containing both comparative and exemplary SOFCs. The comparative SOFCs and the exemplary SOFCs were identical, except that the comparative SOFCs included the low strontium content LSM in both the CLF 316a and the CCL 316b, while the exemplary SOFCs included the low strontium content LSM in the CLF 316a and the high strontium content in the CCL 316b. The low strontium content LSM is represented by the formula (La_{0.8}Sr_{0.2})_{0.97}MnO_{3-d}, wherein d ranges from 0 to 0.1, and the high strontium LSM is represented by the formula (La_{0.65}Sr_{0.35})_{0.95}MnO_{3-d}, wherein d ranges from 0 to 0.1. The present inventors observed a higher mean cell voltage (e.g., 6 to 8 mV higher mean cell voltage) in the exemplary SOFCs than in the comparative SOFCs while operating the SOFC stack on hydrogen fuel and on partially externally reformed hydrocarbon fuel. Although not conclusive, it is believed that the improved exemplary SOFC performance may be due to the higher electrical conductivity of the high strontium content of the CCL 316b in the exemplary SOFCs.

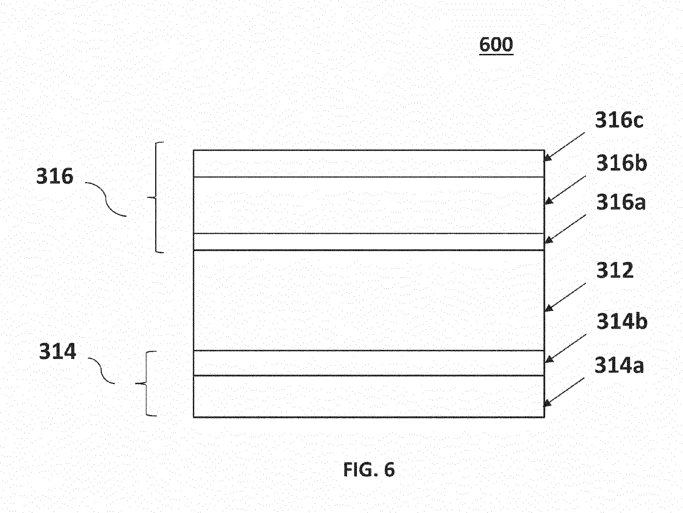

FIG. 6 is a schematic view of an electrochemical cell 600, according to another embodiment of the present disclosure. The electrochemical cell 600 may be the same as the electrochemical cell 500 of the previous embodiment, except for the presence of an additional chromium getter layer 316c in the air electrode 316 (e.g., in the cathode of the SOFC). The chromium getter layer 316c is configured to capture chromium vapor diffusing out of a neighboring interconnect 10 during operation.

The chromium getter layer 316c is located over the CCL 316b, such that the CCL 316b is located between the CFL 316a and the chromium getter layer 316c. The chromium getter layer 316c may comprise a perovskite, such as the lanthanum strontium manganite (LSM). For example, the chromium getter layer 316c may comprise a composite of the perovskite (e.g., LSM) and a spinel, such as a manganese cobalt oxide spinel (MCO). MCO may have a composition Mn₂₋ₓCo₁₊ₓO₄ (0 ≤ x ≤ 1), and may alternatively be written as y(Mn₃O₄) + (1-y)(Co₃O₄), where (1/3 ≤ y ≤ 2/3) or written as (Mn, Co)₃O₄. The chromium getter layer 316c may include from about 50 wt.% to about 90 wt.%, such as about 60 wt.% to about 80 wt.% of the LSM, and from about 10 wt.% to about 50 wt.%, such as about 20 wt.% to about 40 wt.% of the MCO.

The LSM in the chromium getter layer 316c may be the high strontium content LSM represented by the above formula: (Lai-, Sr_{z})_{q}MnO_{3-d}, wherein z ranges from 0.3 to 0.8, q ranges from 0.9 to 1, such as 0.95 to 1, and d is the equilibrium oxygen deficiency which ranges from 0 to 0.2. In one embodiment, z ranges from 0.3 to 0.7, such as from 0.35 to 0.6, including from 0.4 to 0.6 or from 0.4 to 0.5. Although not conclusive, the high strontium content is believed to improve the chromium gettering properties of the LSM, as described above.

Fuel cell systems incorporating the SOFCs of the embodiments of the present disclosure are beneficial to the climate by reducing greenhouse gas emissions.

The foregoing descriptions are provided merely as illustrative examples and are not intended to require or imply that the steps of the various embodiments must be performed in the order presented. As will be appreciated by one of skill in the art, the order of steps in the foregoing embodiments may be performed in any order. Words such as "thereafter," "then," "next," etc. are not necessarily intended to limit the order of the steps; these words may be used to guide the reader through the description of the methods. Further, any reference to claim elements in the singular, for example, using the articles "a," "an" or "the" is not to be construed as limiting the element to the singular.

Further, any step or component of any embodiment described herein can be used in any other embodiment.

The preceding description of the disclosed aspects is provided to enable any person skilled in the art to make or use the present invention. Various modifications to these aspects will be readily apparent to those skilled in the art, and the generic principles defined herein may be applied to other aspects without departing from the scope of the invention. Thus, the present invention is not intended to be limited to the aspects shown herein but is to be accorded the widest scope consistent with the principles and novel features disclosed herein.

## Claims

1. A solid oxide electrochemical cell, comprising:
a solid oxide electrolyte;
a fuel electrode located on a first side of the solid oxide electrolyte; and
an air electrode located on a second side of the solid oxide electrolyte, wherein the air electrode comprises lanthanum strontium manganate (LSM) represented by a first formula:
(La_{1-z} Sr_{z})_{q}MnO_{3-d},
wherein z ranges from 0.3 to 0.8, q ranges from 0.9 to 1, and d is an equilibrium oxygen deficiency which ranges from 0 to 0.2.

2. The solid oxide electrochemical cell of claim 1, wherein z ranges from 0.35 to 0.6, q ranges from 0.95 to 1, and d ranges from 0 to 0.1.

3. The solid oxide electrochemical cell of claim 2, wherein z ranges from 0.4 to 0.6.

4. The solid oxide electrochemical cell of claim 1, wherein the solid oxide electrochemical cell comprises a solid oxide fuel cell (SOFC), and the air electrode comprises a cathode of the SOFC.

5. The solid oxide electrochemical cell of claim 4, wherein:
the cathode comprises a cathode current collecting layer and a cathode functional layer located between the cathode current collecting layer and the second side of the solid oxide electrolyte; and
the cathode current collecting layer comprises or consists essentially of the LSM represented by the first formula.

6. The solid oxide electrochemical cell of claim 5, wherein the cathode functional layer comprises a composite of a non-perovskite ionically conductive ceramic material and the LSM represented by a second formula:
(La_{1-z} Sr_{z})_{q}MnO_{3-d},
wherein z ranges from 0.1 to 0.2, q ranges from 0.9 to 1, and d is the equilibrium oxygen deficiency which ranges from 0 to 0.2.

7. The solid oxide electrochemical cell of claim 6, wherein:
the non-perovskite ionically conductive ceramic material comprises a stabilized zirconia material; and
the stabilized zirconia material comprises zirconia stabilized with 9 to 11 mol % scandia, greater than 0 and equal to or less than 3 mol % ceria, and greater than 0 and equal to or less than 2.5 mol % ytterbia.

8. The solid oxide electrochemical cell of claim 6, wherein the non-perovskite ionically conductive ceramic material comprises a doped ceria material.

9. The solid oxide electrochemical cell of claim 6, wherein a weight percent ratio of the LSM represented by the second formula to the non-perovskite ionically conductive ceramic material is 3:7 to 7:3.

10. The solid oxide electrochemical cell of claim 5, wherein:
the cathode further comprises a chromium getter layer; and
the cathode current collecting layer is located between the cathode functional layer and the chromium getter layer.

11. The solid oxide electrochemical cell of claim 10, wherein the chromium getter layer comprises the lanthanum strontium manganate (LSM) represented by the first formula.

12. The solid oxide electrochemical cell of claim 10, wherein:
the chromium getter layer comprises a composite of the lanthanum strontium manganate (LSM) represented by the first formula and a manganese cobalt oxide spinel material; and
a weight percent ratio of the LSM represented by the first formula to the manganese cobalt oxide spinel material is 1:1 to 9:1.

13. The solid oxide electrochemical cell of claim 1, wherein the LSM represented by the first formula is A-site deficient, and q ranges from 0.94 to 0.99.

14. The solid oxide electrochemical cell of claim 1, wherein the solid oxide electrochemical cell comprises a solid oxide electrolyzer cell (SOEC).

15. A solid oxide electrochemical cell column, comprising:
a plurality of the solid oxide electrochemical cells of claim 1; and
a plurality of interconnects.
